# EUROPEAN PATENT APPLICATION

(11) **EP 1 452 990 A2**
(43) Date of publication of application: **01.09.2004**
(21) Application number: 04003075.1
(22) Date of filing: 11.02.2004
(51) Int. Cl.: G06F 17/60

(54) **Wireless terminal advertisement system**

(30) Priority: 25.02.2003 JP 2003046775
(71) Applicant: NEC CORPORATION, Tokyo (JP)
(72) Inventor: Usami, Shinya, Minato-ku, Tokyo (JP)
(74) Representative: Glawe. Delfs. Moll

(57) **Abstract**

In a wireless terminal advertisement, contents provider causes wireless communication service provider to deliver a piece of partial software of particular software, that may be game software, each time user of a portable wireless terminal accesses the advertisement, for which the contents provider is requested to do so by the advertisement sponsor. The user of the portable wireless terminal will access the advertisement repeatedly to collect pieces of partial software so that ultimately he or she may be able to execute the software as complete software comprising the pieces of partial software, and hence consequently the effect of the advertisement is enhanced. This system can enhance the possibility of causing users to access a particular site for a plurality of times without offering any bonus and improve the advertisement effect.

## Description

### BACKGROUND OF THE INVENTION

### 1. Field of the Invention

This invention relates to a wireless terminal advertisement system using wireless terminals such as cellular phones for advertisements, and more particularly to the wireless terminal advertisement system adapted to enhance the possibility that each wireless terminal accesses data of advertisements repeatedly.

### 2. Related Background Art

The most popular medium for providing advertisements to each home and individual is newspapers. The number of advertisement leaflets that are inserted in each copy of newspaper is ever increasing year by year. In line with this trend, not only morning papers but some evening papers are currently delivered with advertisement leaflets inserted therein. Advertisement leaflets are being widely utilized as sources of information on commercial products and services.

Wireless terminals such as cellular phones, PHSs (personal handy-phone systems), PDAs (personal digital assistants) and portable personal computers have been spreading very widely in recent years. They are propagating into all generations. As a matter of fact, wireless terminals are information tools that are indispensable to the daily life because they are not bound to a specific place for telecommunications unlike wired terminals. Apart from advertisement leaflets, attempts have been made to use wireless terminals as advertisement medium because of this advantage of wireless terminals.

Particularly, unlike newspapers, advertisements do not need to be delivered by hand when wireless terminals are used for advertisements and hence the labor cost necessary to make advertisements reach consumers can be reduced to a large extent. Therefore, it is highly advantageous to use wireless terminals as advertisement medium particularly when an advertisement is disseminated broadly without limiting any target area. However, the effect of advertisement may not be satisfactory if the advertisement is simply delivered to wireless terminals. Thus, various advertisement systems capable of achieving the desired effect of advertisement have been devised.

For instance, there is provided a technique for putting advertisement information on enterprises at the top, in the middle and/or at the bottom of electronic mail that a user transmits the electronic mail to some other user via a telecommunication network (see JP-A-2002-41939). According to the technique, as the user clicks a part displaying advertisement information on enterprises, he or she can accesses the web site of the corresponding enterprise. Additionally, according to the proposal, a certain score may be given to the user each time the user accesses the web site. Still additionally, a character image and/or an image song of the enterprise may be attached to the advertisement of the enterprise so that the appeal and the impression of the enterprise may be improved as the user watch the character image and/or listen to the image song.

There is provided another technique according to which a service provider can cause each subscriber to download given software for telecommunication and in return accumulate personal information on the subscriber in the data base of the service provider (see JP-A-2001-312508). According to the technique, when the service provider receives an order for advertisement from a sponsor, the service provider selects target subscribers of the advertisement from the data base on the basis of the accumulated personal information and sends the advertisement to the selected subscribers. Additionally, the advertisement is so devised as to display a particular character image for the purpose of efficiently enhancing the effect of the advertisement.

There is provided still another technique that has something in common with the above described technique. According to it, as each user utilizes the information provided by a predetermined server, a related information analyzing device analyzes to find out the field of interest of the user (see JP-A-2002-133271).

Of the above-described known techniques, the invention of JP-A-2002-41939 offers the pleasure of watching the image character and/or listening to the image song of the sponsor of the advertisement when the user accesses the web site. However, the web site is provided only for the purpose of advertisement and an advertisement picture may accompany the image song. If the user likes the image song, he or she may not like the picture accompanying the image song at all. Then, the user may be forced to view a picture that he or she does not like and is not appropriate for enjoying the image song. Thus, it may be neither comfortable nor efficient for the user to access the web site for many times. If the user downloads and stores the character image and the image song so as to enjoy them personally, the user may no longer access the web site and the effect of advertisement may be lost.

Additionally, the technique of giving a score each time the user utilizes an advertisement for the purpose of encouraging the user who wants a bonus to access the advertisement has been widely used and not limited to JP-A-2002-41939. When this technique is used, there arises a problem that users who want a large bonus will access only web sites that provide such a large bonus. When a large bonus is provided, the web sites of the advertisement sponsor needs to be accessed by the user for a large number of times. However, it is not rational to assume that a user accesses a particular web site for a large number of times and to provide such a large bonus may not be appropriate for users who want to take time in order to enjoy the advertisement. In other words, it does not make sense to pay a large bonus to a user who is only interested in getting the bonus but not in enjoying the advertisement.

According to the techniques of JP-A-2001-312508 and JP-A-2002-133271, an advertisement is delivered only to those users whose fields of interest match the advertisement on the basis of the data accumulated in the data base or the analysis that has been make on each user. This technique may be effective from the viewpoint of effectively delivering the advertisement because the users to whom the advertisement may be highly effective are selected in advance and the advertisement is delivered only to those users. However, these techniques do not give rise to the effect of causing those users to access the web site of the particular advertisement sponsor repeatedly. Additionally, while it may be effective to display a specific character on the display screen with the advertisement from the viewpoint of giving a good impression to users for the advertisement, the technique of displaying a character may not be effective to cause users to access the web site repeatedly in view of the fact the there actually exist innumerable web sites.

### SUMMARY OF THE INVENTION

Therefore, it is an object of the present invention to provide a wireless terminal advertisement system that can enhance the possibility of causing users to access a particular site for a plurality of times without offering any bonus and improve the advertisement effect.

According to a first aspect of the invention, the above obj ect is achieved by providing a wireless terminal advertisement system which comprises: (a) an advertisement delivery server comprising means for storing advertisement information and a plurality pieces of partial software of predetermined software, means for, when the advertisement information is accessed, selecting at least one of the plurality of pieces of partial software corresponding to the accessed advertisement information, and means for delivering the accessed advertisement information and the selected at least one of the plurality of pieces of partial software; and (b) a wireless terminal connected to the advertisement delivery server via a communication network, comprising a software storage section configured to, each time the wireless terminal receives the advertisement information from the advertisement delivery server and the selected at least one of the plurality of pieces of partial software, sequentially store the received at least one of the plurality of pieces of partial software, a software linking means for linking the plurality of pieces of partial software stored in said software storage section to form executable software, and a software executing means for executing the executable software formed by said software linking means.

Thus, in the first aspect of the invention, the advertisement delivery server stores pieces of partial software that are constituents of predetermined software and advertisement information so that, when the advertisement information is accessed, it selects at least a piece of partial software of the pieces of partial software corresponding to it and delivers the accessed advertisement information and the selected corresponding piece of partial software. With this arrangement, each time the wireless terminal accesses the advertisement information and receives the advertisement information from the advertisement delivery server, it also receives a piece of partial software that accompanies the advertisement information. The wireless terminal sequentially stores the pieces of partial software it has received in its software storage section. The software linking means of the wireless terminal links the plurality of pieces of partial software stored in the software storage section when they come to form executable software if they are linked and the software executing means executes the software that is formed as a result of linking the pieces of partial software. Thus, with a wireless terminal advertisement system in the first aspect of the invention, the user can acquire pieces of partial software of a game of a useful application program each time the user accesses the particular advertisement information. Therefore, the user is encouraged to access a particular web site in order to acquire executable software and hence the effect of the advertisement will be enhanced.

According to a second aspect of the invention, there is also provided a wireless terminal advertisement system which comprises: (a) an advertisement delivery server comprising means for storing advertisement information and identification information for identifying a plurality of pieces of partial software of predetermined software, means for, when the advertisement information is accessed, selecting at least one of the identification information for specifying the plurality of pieces of partial software corresponding to the accessed advertisement information, and means for delivering the accessed advertisement information and the selected identification information; (b) a software delivery server comprising means for linking all or part of the plurality of pieces of partial software to form the predetermined software made to be executable by itself, means for storing the predetermined software, and means for delivering the predetermined software stored in the means for storing; and (c) a wireless terminal connected to the advertisement delivery server and the software delivery server via a communication network, comprising a software identification information storage section configured to, each time the wireless terminal receives the advertisement information and the selected identification information from the advertisement delivery server, sequentially store the identification information, a combination of identification information specifying means for specifying a combination of the identification information necessary for acquiring the predetermined software made to be executable by linking the plurality of pieces of partial software corresponding, respectively, to the identification information stored in said software identification information storage section, a software downloading means for downloading the predetermined software of the plurality of pieces of partial software corresponding to the combination of the identification information specified by said combination of identification information specifying means, and a software executing means for executing the predetermined software downloaded by said software downloading means.

Thus, in the second aspect of the invention, the advertisement delivery server stores pieces of identification information for specifying respective pieces of partial software that are constituents of predetermined software and advertisement information so that, when the advertisement information is accessed, it selects at least a piece of identification information for specifying a piece of partial software of the corresponding pieces of partial software and delivers the accessed advertisement information and the selected piece of identification information. With this arrangement, each time the wireless terminal accesses the advertisement information and receives the advertisement information from the advertisement delivery server, it also receives a piece of identification information for specifying a piece of partial software that accompanies the advertisement information. The wireless terminal sequentially stores the pieces of identification information it has received in its software identification information storage section. The combination of pieces of identification information specifying means specifies a combination of pieces of identification information necessary for acquiring the software made to be executable by linking the pieces of partial software corresponding respectively to the plurality of pieces of identification information stored in the software identification information storage section. Then, the software downloading means downloads the software from the software delivery server and the software executing means executes the downloaded software. Thus, with a wireless terminal advertisement system in the second aspect of the invention, the user can acquire pieces of partial software of a game of a useful application program each time the user accesses the particular advertisement information. Therefore, the user is encouraged to access a particular web site in order to acquire executable software and hence the effect of the advertisement will be enhanced. Additionally, the software downloading means downloads the software corresponding to the specified combination of pieces of identification information from the software delivery server and the software executing means of the wireless terminal executes the software. Thus, with a wireless terminal advertisement system in the second aspect of the invention, the user can acquire pieces of identification information for identifying the corresponding pieces of partial software of a game or a useful application program each time the user accesses the particular advertisement information. Therefore, the user is encouraged to access a particular web site in order to acquire executable software and hence the effect of the advertisement will be enhanced.

In a third aspect of the invention, a wireless terminal advertisement system according to the first aspect of the invention is characterized in that the wireless terminal further comprises a partial software transmission/reception section for transmitting and receiving particular pieces of partial software stored in said software storage section to and from another wireless terminal via the communication network.

Thus, in the third aspect of the invention, wireless terminals can exchange pieces of partial software they own. With this arrangement, users can share the same interest in a particular advertisement. Additionally, in the third aspect of the invention users of a wireless terminal advertisement system can exchange not all the pieces of partial software that are constituents of predetermined software but only limited pieces of partial software. Therefore, wireless terminals need to access the particular advertisement information. Thus, this arrangement can not only maintain the effect of the particular advertisement but also inform users of up-to-date information on the commodities or the like provided by the advertisement sponsor.

In a fourth aspect of the invention, a wireless terminal advertisement system according to the second aspect of the invention is characterized in that the wireless terminal further comprises an identification information transmission/reception section for transmitting and receiving particular pieces of identification information stored in the software identification information storage section to and from another wireless terminal via the communication network.

Thus, the fourth aspect of the invention provides an advantage similar to the one described in the third aspect of the invention, for the second aspect of the invention.

In a fifth aspect of the invention, a wireless terminal advertisement system according to the first aspect of the invention is characterized in that the wireless terminal further comprises a relationship displaying means for displaying the relationship between the group of pieces of partial software of executable software and pieces of partial software currently stored in the storage section.

In the fifth aspect of the invention, the relationship between the pieces of partial software that the user of the wireless terminal has already acquired or the corresponding pieces of identification information and the target software to be executed is displayed so as to encourage the user to collect the remaining pieces of partial software and hence access the advertisement information.

In a sixth aspect of the invention, a wireless terminal advertisement system according to the second aspect of the invention is characterized in that the advertisement delivery server and the software delivery server is formed as a single delivery server.

Thus, in the sixth aspect of the invention, the advertisement delivery server and the software delivery server may form a single delivery server, although they may be separate servers.

### BRIEF DESCRIPTION OF THE DRAWINGS

In the accompanying drawings:
FIG. 1 is a schematic illustration of an embodiment of wireless terminal advertisement system according to the present invention, showing the configuration thereof;
FIG. 2 is a schematic block diagram of a portable wireless terminal that can be used for the embodiment of the present invention;
FIG. 3 is a schematic illustration of the operation of the embodiment of wireless terminal advertisement system of the present invention;
FIG. 4 is a schematic illustration of the relationship between the software that a user may ultimately execute and the pieces of partial software that the wireless communication service provider delivers to the user according to the embodiment of the present invention;
FIG. 5 is a plan view of the display section, illustrating how the display contents appear when the user is viewing the advertisement information being displayed according to the embodiment of the present invention;
FIG. 6 is a plan view of the display screen displaying the relationship between the acquired image and the ultimately executable software according to the embodiment of the present invention;
FIG. 7 is a schematic illustration of an example of image showing how pieces of partial software are combined to form executable complete software according to the embodiment of the present invention;
FIG. 8 is a flow chart of the delivery control operation of the contents provider that is performed when there is an access to a particular advertisement, requesting delivery thereof in the embodiment of the present invention;
FIG. 9 is a schematic illustration of the entire configuration of another embodiment, showing the advertisement delivery server and the software delivery server according to the present invention; and
FIG. 10 is a schematic block diagram of the advertisement delivery server and the software delivery server of FIG. 9.

### DESCRIPTION OF THE PREFERRED EMBODIMENT

Now, the present invention will be described in greater detail by referring to the accompanying drawings that illustrates a preferred embodiment of the invention.

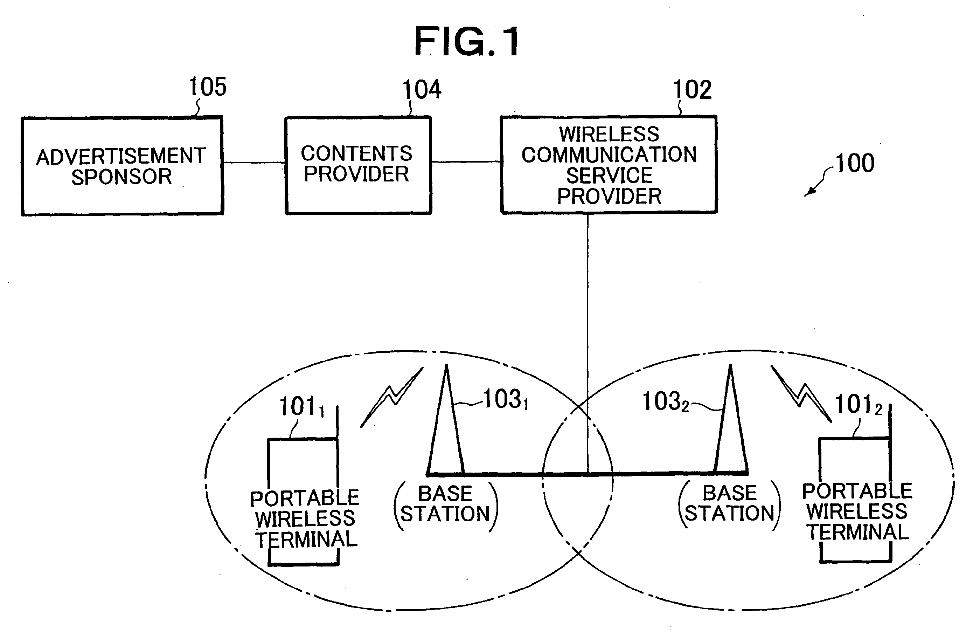

FIG. 1 is a schematic illustration of the embodiment of wireless terminal advertisement system according to the invention, showing the configuration thereof. Wireless terminal advertisement system 100 is designed as a system for transmitting advertisements to the users that use portable wireless terminals 101₁, 101₂, ... (only portable wireless terminals 101₁, 101₂ are shown in FIG. 1 for the purpose of simplification), which may include cellular phones. Wireless communication service provider 102 provides communication services including voice communication services and data communication services to the portable wireless terminals 101₁, 101₂, ... by way of base stations 103₁, 103₂, ... (only base stations 103₁, 103₂ are shown in FIG. 1 for the purpose of simplification). Contents provider 104 attaches an advertisement to the contents it provides to the users for viewing according to the request made by advertisement sponsor 105 and delivers the contents by way of the wireless communication service provider 102. This embodiment is so designed that, when the portable wireless terminal 101₁, for instance, asks to receive contents, advertisement information and one or more than one pieces of partial software that are constituents of executable software are also delivered to the portable wireless terminal 101₁.

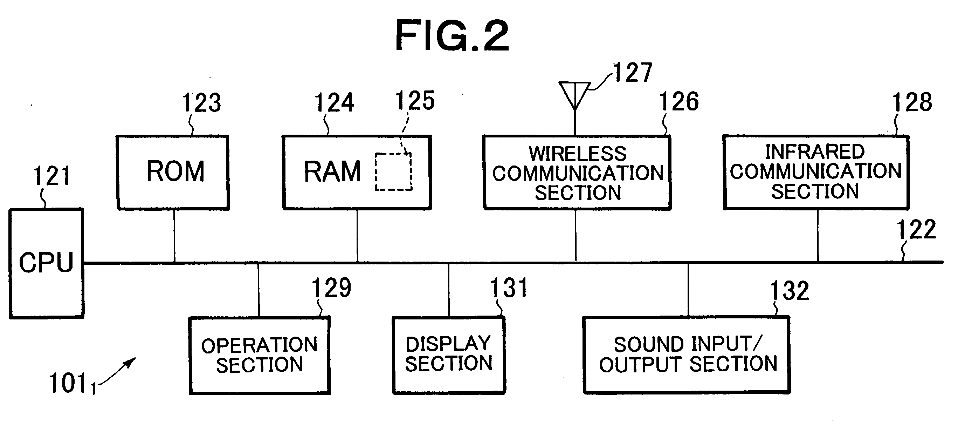

FIG. 2 shows the configuration of a portable wireless terminal that can be used for this embodiment. While the configuration of the portable wireless terminal 101₁ is described below, all the other portable wireless terminals 101₂ ... basically have the same configuration. The portable wireless terminal 101₁ comprises CPU (central processing unit) 121, which controls communications and other operations according to the control program stored in ROM (read-only memory) 123 which is connected to bus 122. The bus 122 may typically be a data bus. RAM 124 is a memory having a relatively large storage capacity, which is partly allocated to software storage section 125. The software storage section 125 collects pieces of partial software that are provided by the contents provider 104 as constituents of software shown in FIG. 1 and stores software that is formed by linking the collected pieces of partial software so object of execution.

Wireless communication section 126 is a circuit responsible for wireless communications between the portable wireless terminal 101₁ and the base station 103₁ shown in FIG. 1 by way of antenna 127. Infrared communication section 128 comprises a light emitting element and a light receiving element as pair and is a circuit adapted to communicate with other portable wireless terminals 101₂, ... for data transmission/reception. It is important in this embodiment that the portable wireless terminal 101₁ can directly transmits pieces of partial software to and receive pieces of partial software from other portable wireless terminals 101₂, ... . Operation section 129 operates when a user dials the number to be called by means of various keys arranged on the operation panel (not shown) of the portable wireless terminal 101₁ or uses certain software, which may be game software that is stored in the software storage section 125 as executable software.

Display section 131 comprises a display such as a liquid crystal display or organic EL (electroluminescence) display. In this embodiment, the display section 131 is used to display not only the contents that the user acquired as a result of accessing the wireless communication service provider 102 and the advertisements that the advertisement sponsor 105 requested the contents provider 104 to attach to the contents but also an image showing the relationship between the pieces of partial software and the executable software that to be constituted by using the pieces of partial software, which will be described in greater detail hereinafter. Sound input/output section 132 is used to exchange voices between a user and the called or calling person by way of a microphone and a loudspeaker and allow the user to listen to music, using the downloaded data.

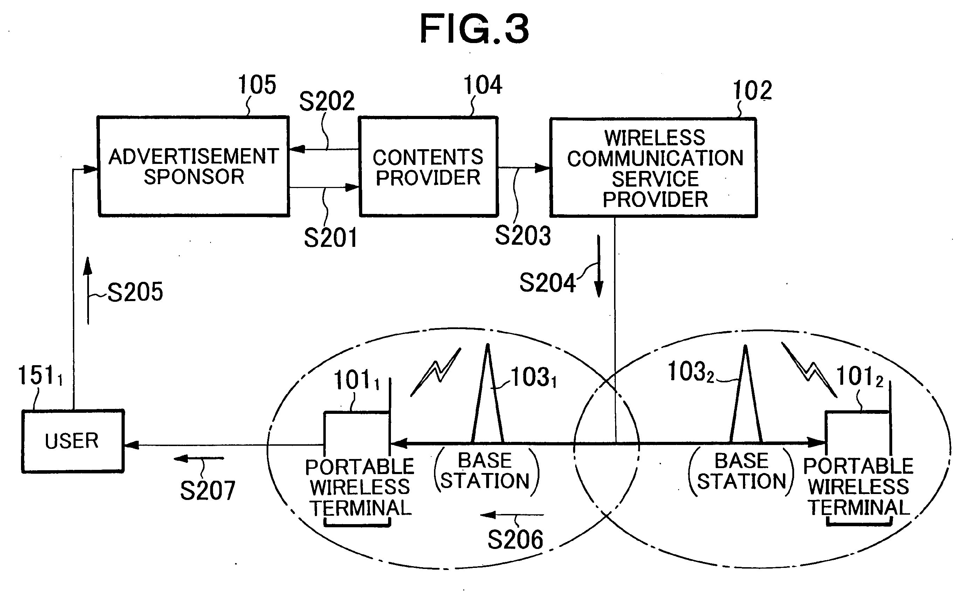

FIG. 3 is a schematic illustration of the operation of this embodiment of wireless terminal advertisement system. The advertisement sponsor 105 requests the contents provider 104 to prepare both advertisement information and software to be provided to users (Step S201). The advertisement sponsor 105 may purchase software that is marketed and hence commercially available. The contents provider 104 charges the advertisement sponsor 105 the price for the prepared advertisement information and the software and the delivery fare (Step S202) and pays the delivery expense to the wireless communication service provider 102 (Step S203) . As a result, the wireless communication service provider 102 can make the contents of the contents provider 104 accessible to the portable wireless terminals 101₁, 101₂, .... Thereafter, for example, if the user of the portable wireless terminal 101₁ accesses the wireless communication service provider 102 to acquire the contents, the service provider 102 delivers the contents to the portable wireless terminal 101₁ by wireless transmission (Step S204) . At the same time, the pieces of partial software that have been made to correspond to the contents in advance are also delivered to the portable wireless terminal 101₁.

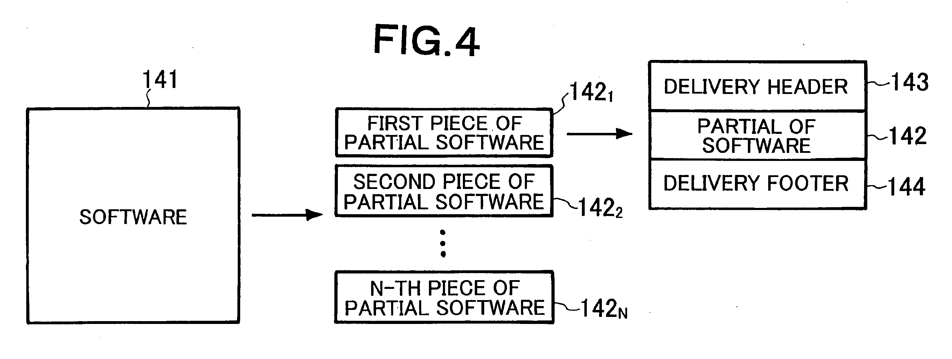

FIG. 4 is a schematic illustration of the relationship between the software that a user may ultimately execute and the pieces of partial software that the wireless communication service provider delivers to the user. While the software 141, which may be game software prepared according to the request made by the advertisement sponsor 105, may be delivered to the portable wireless terminal 101₁ without modification in a manner as shown in FIG. 1, it is divided into the first to N-th pieces of partial software 142₁, 142₂, ..., 142_{N} so as to enable the user to access the contents and the advertisement provided by the advertisement sponsor 105 for a number of times. These pieces of partial software may be delivered sequentially in the above numerical order or randomly. In other words, each of the first to N-th pieces of partial software 142₁, 142₂, ..., 142_{N} is simply digital data. Therefore, delivery header 143 and delivery footer 144 are added respectively to the head and the tail of each piece of partial software to modify the partial software into a data format that is adapted to be transmitted at a time. In this instance, the wireless communication service provider 102 delivers the modified data to the portable wireless terminal 101₁ as shown in FIG. 3.

Then, the portable wireless terminal 101₁ of FIG. 1 automatically stores the piece of partial software 142ₓ it received as a result of viewing the advertisement of the advertisement sponsor 105 in the software storage section 125 (FIG. 2). The user 151₁ can constantly see what are stored in the software storage section 125 by displaying the contents on the display section 131 (FIG. 2). The user 151₁ can easily realize the relationship between the piece of partial software 142ₓ and the executable software that can be obtained by combining the piece of partial software 142ₓ and some other pieces of partial software by means of the display section 131 (FIG. 2) as will be described hereinafter. As a result, the user 151₁ will be encouraged to view the advertisement of the advertisement sponsor 105 to ultimately acquire the executable software.

The user 151₁ of the portable wireless terminal 101₁ shown in FIG. 3 sequentially collects one or more than one pieces of partial software (Step S206) each time he or she views the advertisement of the advertisement sponsor 105 (Step S205). When all the pieces of partial software for the executable software are collected finally, the user 151₁ links them all and executes the software at the portable wireless terminal 101₁ (Step S207). If, for example, certain game software is constituted by four pieces of partial software, the user can play the game at the portable wireless terminal 101₁ after collecting the four pieces of partial software.

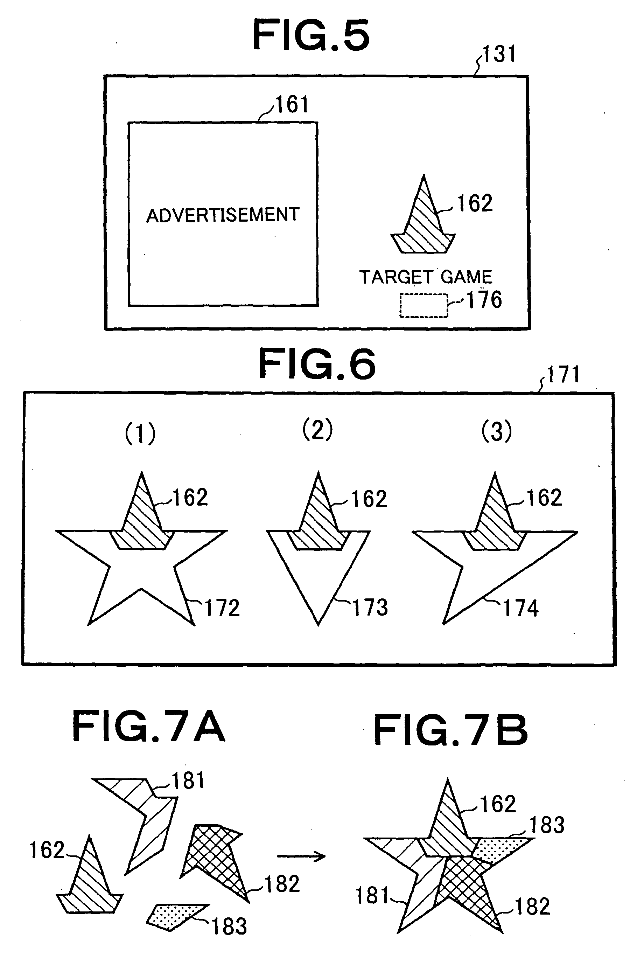

FIG. 5 shows an example of the display section, illustrating how the display contents appear when the user is viewing the advertisement information being displayed. Advertisement 161 of the advertisement sponsor 105 is displayed in a predetermined region of the display section 131 and image 162 of the piece of partial software that is acquired this time is displayed beside the advertisement 161. Blank column 176 is arranged below the image 162 so that the user 151, may put the name of the game therein, the software of which he or she regards as target of collection.

FIG. 6 shows an example of the display screen displaying the relationship between the acquired image and the ultimately executable software. As the user sets the portable wireless terminal 101₁ he or she owns in a software acquisition target mode by operating the operation section 129 of the portable wireless terminal 101₁, software acquisition target image 171 as shown in FIG. 6 is displayed. The software acquisition target image 171 contains image 162 of the piece of partial software shown in FIG. 5 that the user firstly acquired and profile images 172 through 174 of the pieces of software that the user can acquire ultimately. Although not shown, the names and contents of the software that can be played by executing the pieces of software represented by the respective profile images 172 through 174 are displayed on the screen in help format.

For example, the first profile image 172 indicated by (1) in FIG. 6 may represent the software of "XX Role-Playing Game" and the second profile image 173 indicated by (2) may represent the software of "XX Board Game", while the third profile image 174 indicated by (3) may represent the software of "XX Online Game". The embodiment may offer pieces of software for practical purposes in place of games.

The user decides the software for which he or she would collect pieces of partial software, seeing the image 162 of the piece of partial software he or she has acquired. Then, the user inputs the corresponding numeral in column 176 shown in FIG. 5 by means of the operation section 129 (FIG. 2), referring to the software acquisition target image 171 shown in FIG. 6. As a result, the contents provider 104 of FIG. 1 can decide the piece of partial software that is to be delivered to the user of the portable wireless terminal 101₁ so as to meet the demand of the user. Alternatively, the embodiment may be so arranged that the contents provider 104 can select a piece of partial software at will and transmit it each time the user accesses the advertisement of a particular advertisement sponsor 105. In case of such an arrangement, the user displays the software acquisition target image 171 as shown in FIG. 6 so that the user can realize that the executable software is prepared when any one of the profile images 172 through 174 of software is solidly darkened.

FIG. 7 is a schematic illustration of an example of image showing how pieces of partial software are combined to form executable complete software. The illustrated example shows how the profile image 172 in (1) of FIG. 6 is completed. As shown in FIG. 7, the profile image 172 in FIG. 6 is completed as images 181 through 183 of three pieces of partial software are added to the image 162 of a piece of partial software to indicate that the software of "XX Role Playing Game" has become executable.

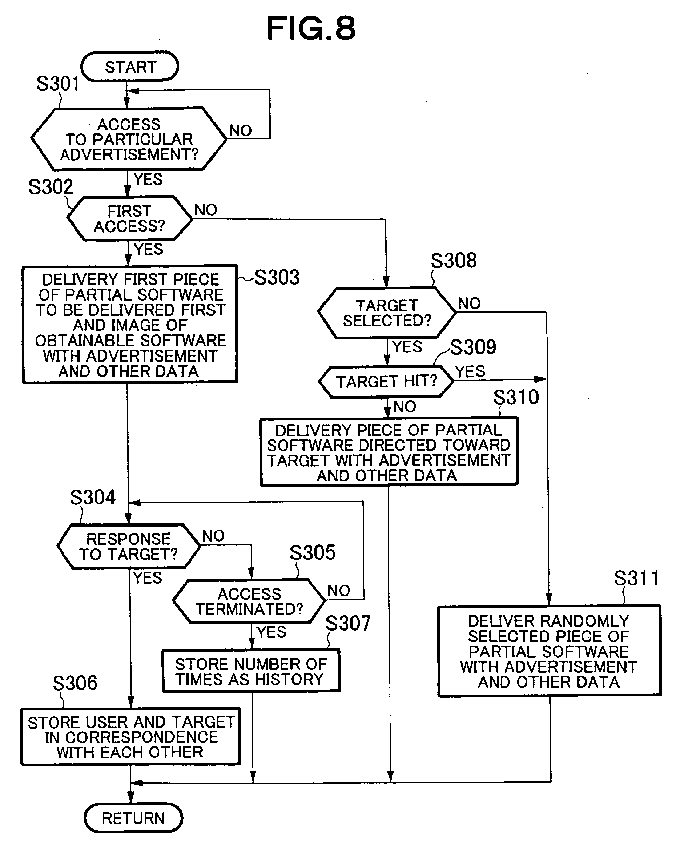

FIG. 8 is a flow chart of the delivery control operation of the contents provider that is performed when there is an access to a particular advertisement, requesting delivery thereof. The contents provider 104 of FIG. 1 can process the access by using a CPU (not shown) or a computer (not shown) having a storage medium storing a control program. Assume here that there is an access from one of the portable wireless terminals 101₁, 101₂, ..., requesting delivery of the advertisement of a particular advertisement sponsor 105 (Step S301:Y). The CPU determines if it is the first access to the contents of the advertisement on the basis of the identification information of the portable wireless terminal (which is assumed here to be the portable wireless terminal 101₁), which may be the telephone number (Step S302). If the access of the portable wireless terminal 1011 is the first access (Y), the CPU causes the piece of partial software that need to be delivered first (the piece of partial software that corresponds to the image 162 in FIG. 6) and the profile images 172 through 174 of the pieces of software that can be obtained by using the piece of partial software to be actually delivered to the portable wireless terminal 101₁ along with the data for the contents of the advertisement and the like (Step S303). Then, the user can display the software acquisition target image 171 as shown in FIG. 6, using the delivered data.

The CPU of the contents provider 104 checks if there is a response from the user for the target game (Step S304) or there is no such a response and the access is terminated (Step S305). If there is a response for the target game (Step S304: Y), it stores the numeral indicated as target and the type of the piece of the partial software delivered to the portable wireless terminal 101₁ at this time with an indication of correspondence to the user of the portable wireless terminal 101₁ (Step S306). If there is no response for the target game and the access to the contents is terminated (Step S305: Y), the CPU stores the number of times for which the user of the portable wireless terminal 101₁ accessed the contents as historical information (Step S307) and ends the processing operation (return).

When the user accesses the contents for the second time or a latter time (Step S301: Y, S302: N), the CPU checks if the user has selected a target or not (Step 5308). If the user has selected a target (Y), the CPU checks if the target has been hit or not (Step S309). If the target has not been hit (N), the CPU delivers a piece of partial software along with the contents of the advertisement so as to assist the user hit the target (Step S310). However, if very valuable software is to be ultimately executed, instead of simply delivering pieces of partial software that have not been delivered on a one by one basis in Step S310, it may be effective to deliver pieces of unrelated partial software or to redundantly deliver pieces of partial software that have been delivered in the past until the user accesses the contents of the advertisement for a given number of times.

If it is found in Step S308 that the user has not selected any target (N), the CPU delivers a randomly selected piece of partial software along with the contents of the advertisement because the user is not interested in any particular game or application software (Step S311). The processing operation of Step S311 is also performed if it is determined in Step S309 that the user has succeeded in acquiring the software of the game of the target (Step S309: Y).

It may be appreciated that the above described control procedure on the part of the contents provider 104 can be modified in various different ways. For instance, pieces of partial software that have been selected randomly may be delivered on a one by one basis until the user accesses the contents of the advertisement for a given number of times and thereafter the user may be allowed to select software as target. Alternatively, it may be so arranged that only a single set of software is provided and the more the user accesses the contents of the advertisement, the more characters of the game he or she can get, the more complex stories of the game, or the more colors the display shows. Still alternatively, it may be so arranged that, when the user of the portable wireless terminal 101₁ has accessed the contents of the advertisement for more than a predetermined number of times, he or she is authorized to directly give particular pieces of partial software to any of the other portable wireless terminals 101₂, ... and/or get particular pieces of partial software from any of the other portable wireless terminals 101₂, ... as award to his or her merit.

If the advertisement sponsor 105 agrees, it may be so arranged that any of the portable wireless terminals 101₁, 101₂, ... can exchange any of the pieces of partial software by way of the infrared communication section 128 shown in FIG. 2. This tactics will be effective to make unknown software famous or distribute pieces of particular game software practically without restrictions or pieces of handy or tentative software for the purpose of broad dissemination. However, it should be noted that, if any of the users of the portable wireless terminals 101₁, 101₂, ... are allowed to directly collect pieces of partial software typically by means of the infrared communication section 128 without passing by the wireless communication service provider 102, there can be consequences that do not satisfy the advertisement sponsor 105 at all. Therefore, in the case where a number of pieces of partial software need to be collected to complete particular executable software, it may be effectively so arranged that some of the pieces of partial software can be acquired only by way of a specified route, for instance by accessing the contents of the contents provider 104.

When a whole set of pieces of partial software are collected in a manner as described above and stored in the software storage section 125 shown in FIG. 2, the user links them to form a single piece of software. Thereafter, the user can activate and use the executable software whenever he or she likes to do so.

### <Modifiability of the Invention>

The portable wireless terminals 101₁, 101₂, ...of the above described embodiment are adapted to store pieces of partial software in themselves for the users. Then, any of the users can acquire executable software by linking the stored pieces of partial software when they become ready to be linked so that the user can execute the software, which may be that of a game or an application program. However, as the number of contents adapted to provide such services increases on a web site and users come to collect pieces of partial software from a number of web sites, the memory of a wireless terminal may be totally or almost totally occupied by such pieces of partial software particularly when the wireless terminal is small and the memory has only a limited capacity. Such a situation can be avoided when it is so arranged that only a piece of identification information that corresponds to a piece of partial software is stored in the memory of the wireless terminal and the executable complete program is downloaded from the contents provider 104 when it is known to the latter on the basis of the stored pieces of identification information that the executable software is completed.

When pieces of identification information are controlled for corresponding pieces of partial software, the contents provider 104 is required to control only the contents of advertisements and pieces of identification information of partial software so that the roll of controlling complete software may be assigned to some other server who is dedicated to distribute software. With such an arrangement, when a user wants to download particular executable software because he or she has collected the necessary pieces of partial software, the user may communicate with and ask the contents provider 104 to request the server dedicated to distribution of software to download the software or the server dedicated to distribution of software may be adapted to collect information on the pieces of partial software of each user from the contents provider 104.

While the above described embodiment comprises portable wireless terminals, it may be appreciated that the present invention is also applicable to a system that comprises ordinary wireless terminals that are located in homes or the like and connected to a wireless LAN (local area network).

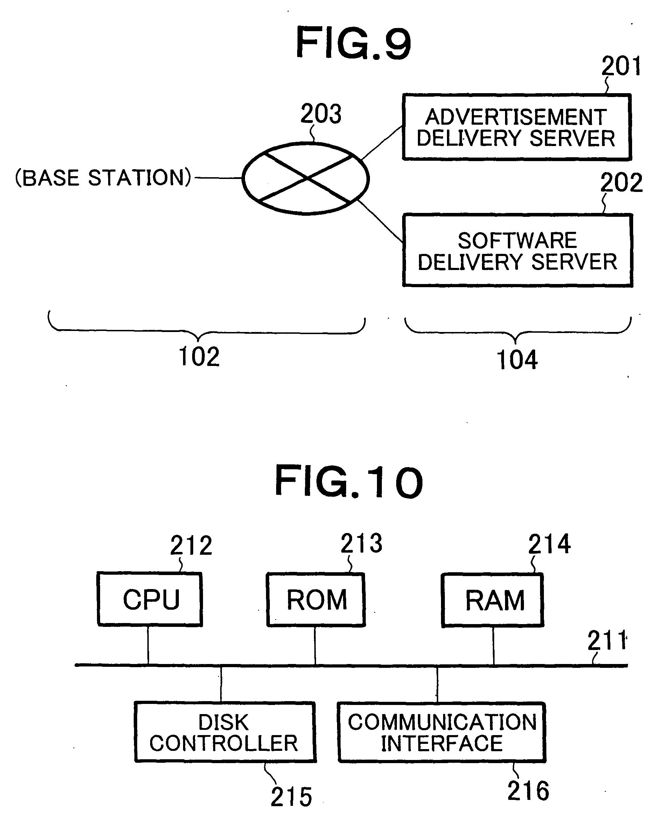

It may also be appreciated that the computer of the contents provider 104 of the above described embodiment corresponds to the advertisement delivery server and the software delivery server of a wireless terminal advertisement system according to the invention. FIG. 9 is a schematic illustration of the entire configuration, showing the advertisement delivery server and the software delivery server and FIG. 10 is a schematic block diagram of the advertisement delivery server and the software delivery server of FIG. 9.

As shown in FIG. 9, the advertisement delivery server 201 and the software delivery server 202 as the computer of the contents provider 104 are connected to the communication network 203 of the wireless communication service provider 102 and hence can communicate with portable wireless terminals via the communication network 203 and a base station.

The two delivery servers 201 and 202 may be formed by respective computer machines or by the same and single computer machine. For example as shown in FIG. 10, each of them connected to a bus 211 may comprise as hardware a CPU 212 that controls the entire operation of the server, a ROM 213 for storing fixed information and instructions that will be processed by the CPU 212, a RAM 214 for storing instructions and information (including temporarily generated intermediary information) for control and processing programs that will be executed by the CPU 212, a disk controller 215 such as HDD (hard disk drive) and a communication interface 216 which may be a LAN interface or an ADSL card, an ISDN card, a modem, or the like that can be connected to a telephone line. The communication interface 216 is connected to the base stations via the communication network 203 of the wireless communication service provider 102 so as to transmit/receive digital signals carrying various pieces of information of the above described type according to a predetermined communication protocol. With this arrangement again, the steps of delivery control operation of the contents provider 104 as described above by referring to FIG. 8 may be performed.

As described above, in the first aspect of the invention, each time a user accesses particular advertisement information, the user acquires pieces of partial software of a game or an application program so that the user is encouraged to access a particular web site to acquire executable software and.hence consequently the effect of the advertisement is increased.

In the second aspect of the invention, each time a user accesses particular advertisement information, the user acquires pieces of identification information for identifying the corresponding pieces of partial software of a game or a useful application program so that the user is encouraged to access a particular web site in order to acquire the executable software and hence the effect of the advertisement is increased. Additionally, since the wireless terminal of the user only needs to store identification information, the memory of the wireless terminal is exempted from a large load in a stage prior to executing the software.

In the third aspect of the invention, when the wireless terminals of a wireless terminal advertisement system according to the first aspect of the invention are adapted to exchange particular pieces of partial software stored in the software storage section of each wireless terminal by wireless communications, the propaganda effect can be enhanced for each advertisement as information on the advertisement is exchanged among wireless terminals. Additionally, it is so arranged that each wireless terminal is required to obtain a number of pieces of partial software by accessing particular advertisement information. This arrangement can not only maintain the effect of the particular advertisement but also inform users of up-to-date information on the commodities or the like provided by the advertisement sponsor.

In the fourth aspect of the invention, when the wireless terminals of a wireless terminal advertisement system according to the second aspect of the invention are adapted to exchange pieces of identification information for identifying particular pieces of partial software stored in the software identification information storage section of each wireless terminal by wireless communications, the propaganda effect can be enhanced for each advertisement as information on the advertisement is exchanged among wireless terminals. Additionally, it is so arranged that each wireless terminal is required to obtain a number of pieces of identification information corresponding to respective pieces of partial software by accessing particular advertisement information. This arrangement can not only maintain the effect of the particular advertisement but also inform users of up-to-date information on the commodities or the like provided by the advertisement sponsor.

In the fifth aspect of the invention, it is so arranged that the display section of the wireless terminal of each user is adapted to display the relationship of the pieces of partial software or the pieces of identification information corresponding the pieces of partial software that have been acquired so far and the target software to be executed, the user is encouraged to collect more pieces of partial software by actively accessing the advertisement information.

## Claims

1. A wireless terminal advertisement system which comprises:
an advertisement delivery server comprising
means for storing advertisement information and a plurality pieces of partial software of predetermined software,
means for, when the advertisement information is accessed, selecting at least one of the plurality of pieces of partial software corresponding to the accessed advertisement information, and
means for delivering the accessed advertisement information and the selected at least one of the plurality of pieces of partial software; and
a wireless terminal connected to the advertisement delivery server via a communication network, comprising
a software storage section configured to, each time the wireless terminal receives the advertisement information from the advertisement delivery server and the selected at least one of the plurality of pieces of partial software, sequentially store the received at least one of the plurality of pieces of partial software,
a software linking means for linking the plurality of pieces of partial software stored in said software storage section to form executable software, and
a software executing means for executing the executable software formed by said software linking means.

2. A wireless terminal advertisement system which comprises:
an advertisement delivery server comprising
means for storing advertisement information and identification information for identifying a plurality of pieces of partial software of predetermined software,
means for, when the advertisement information is accessed, selecting at least one of the identification information for specifying the plurality of pieces of partial software corresponding to the accessed advertisement information, and
means for delivering the accessed advertisement information and the selected identification information;
a software delivery server comprising
means for linking all or part of the plurality of pieces of partial software to form the predetermined software made to be executable by itself,
means for storing the predetermined software, and
means for delivering the predetermined software stored in the means for storing; and
a wireless terminal connected to the advertisement delivery server and the software delivery server via a communication network, comprising
a software identification information storage section configured to, each time the wireless terminal receives the advertisement information and the selected identification information from the advertisement delivery server, sequentially store the identification information,
a combination of identification information specifying means for specifying a combination of the identification information necessary for acquiring the predetermined software made to be executable by linking the plurality of pieces of partial software corresponding, respectively, to the identification information stored in said software identification information storage section,
a software downloading means for downloading the predetermined software of the plurality of pieces of partial software corresponding to the combination of the identification information specified by said combination of identification information specifying means, and
a software means executing for executing the predetermined software downloaded by said software downloading means.

3. The system according to claim 1, wherein
said wireless terminal further comprises a partial software transmission/reception section for transmitting and receiving particular pieces of partial software stored in said software storage section to and from another wireless terminal via the communication network.

4. The system according to claim 2, wherein
said wireless terminal further comprises an identification information transmission/reception section for transmitting and receiving particular pieces of identification information stored in the software identification information storage section to and from another wireless terminal via the communication network.

5. The system according to claim 1, wherein
said wireless terminal further comprises a relationship displaying means for displaying the relationship between the group of pieces of partial software of executable software and pieces of partial software currently stored in the storage section.

6. The system according to claim 2, wherein
said advertisement delivery server and said software delivery server are formed as a single delivery server.

7. An advertisement delivery server comprising:
means for storing advertisement information and a plurality pieces of partial software of predetermined software;
means for, when the advertisement information is accessed, selecting at least one of the plurality of pieces of partial software corresponding to the accessed advertisement information; and
means for delivering the accessed advertisement information and the selected at least one of the plurality of pieces of partial software.

8. A wireless terminal connected to an advertisement delivery server via a communication network, comprising:
a software storage section configured to, each time the wireless terminal receives the advertisement information from the advertisement delivery server and the selected at least one of the plurality of pieces of partial software, sequentially store the received at least one of the plurality of pieces of partial software;
a software linking means for linking the plurality of pieces of partial software stored in said software storage section to form executable software; and
a software executing means for executing the executable software formed by said software linking means.

9. An advertisement delivery server comprising:
means for storing advertisement information and identification information for identifying a plurality of pieces of partial software of predetermined software;
means for, when the advertisement information is accessed, selecting at least one of the identification information for specifying the plurality of pieces of partial software corresponding to the accessed advertisement information; and
means for delivering the accessed advertisement information and the selected identification information.

10. A software delivery server comprising:
means for linking all or part of the plurality of pieces of partial software to form the predetermined software made to be executable by itself;
means for storing the predetermined software; and
means for delivering the predetermined software stored in the means for storing.

11. A wireless terminal connected to an advertisement delivery server and a software delivery server via a communication network, comprising:
a software identification information storage section configured to, each time the wireless terminal receives the advertisement information and the selected identification information from the advertisement delivery server, sequentially store the identification information;
a combination of identification information specifying means for specifying a combination of the identification information necessary for acquiring the predetermined software made to be executable by linking the plurality of pieces of partial software corresponding, respectively, to the identification information stored in said software identification information storage section;
a software downloading means for downloading the predetermined software of the plurality of pieces of partial software corresponding to the combination of the identification information specified by said combination of identification information specifying means; and
a software executing means for executing the predetermined software downloaded by said software downloading means.
